Europäisches Patentamt

European Patent Office

Office européen des brevets

(11) Numéro de publication : **0 526 290 B1**

(12) **FASCICULE DE BREVET EUROPEEN**

(45) Date de publication du fascicule du brevet :
**20.09.95 Bulletin 95/38**

(51) Int. Cl.⁶ : **H01C 7/00,** H01C 17/12,
G01L 1/22

(21) Numéro de dépôt : **92401977.1**

(22) Date de dépôt : **09.07.92**

(54) **Couche mince extensométrique en cermet à base de tantale et de nitrure de tantale, son procédé de préparation et son utilisation dans un capteur de pression.**

(30) Priorité : **26.07.91 FR 9109480**

(43) Date de publication de la demande :
**03.02.93 Bulletin 93/05**

(45) Mention de la délivrance du brevet :
**20.09.95 Bulletin 95/38**

(84) Etats contractants désignés :
**DE DK GB IT NL**

(56) Documents cités :
**EP-A- 0 035 351**
**DE-A- 1 490 927**
**FR-A- 2 638 524**
**THIN SOLID FILMS, vol. 57, no. 1, 1979, Lausanne,CH;T. SHIOYAMA et al.:"Pressure dependence of the electrical properties of TaN thin films"**
**PATENT ABSTRACTS OF JAPAN,vol. 3, no. 153 (E-159)15 Décembre 1979; & JP-A-54 134 461**

(73) Titulaire : **Schlumberger Limited**
**277 Park Avenue**
**New York, N.Y. 10017 (US)**
(84) **GB**
Titulaire : **SCHLUMBERGER TECHNOLOGY B.V.**
**Carnegielaan 12**
**NL-2517 KM Den Haag (NL)**
(84) **DE DK IT**
Titulaire : **SCHLUMBERGER HOLDINGS LIMITED**
**P.O. Box 71,**
**Craigmuir Chambers**
**Road Town, Tortola (VG)**
(84) **NL**

(72) Inventeur : **Petitjean, Luc**
**14 Flintlock Drive**
**Danbury, Connecticut 06811 (US)**
Inventeur : **Bonnin, Eric**
**20, rue du Grelin**
**F-86300 Chauvigny (FR)**
Inventeur : **Rezgui, Fadhel**
**130, boulevard du Montparnasse**
**F-75014 Paris (FR)**

(74) Mandataire : **Hagel, Francis et al**
**ETUDES ET PRODUCTIONS SCHLUMBERGER**
**Service Brevets**
**B.P. 202**
**F-92142 Clamart Cédex (FR)**

## Description

**Couche mince extensométrique en cermet à base de tantale et de nitrure de tantale, son procédé de préparation et son utilisation dans un capteur de pression.**

La présente invention a pour objet une couche mince extensométrique, utilisable en particulier dans un capteur de pression destiné à la mesure de pressions dans des puits de pétrole.

Les capteurs de pression utilisés dans les puits de pétrole doivent résister à de sévères conditions d'utilisation, notamment à des températures élevées pouvant aller jusqu'à 175°C et des pressions élevées pouvant aller jusqu'à 14.10⁷Pa, tout en restant fiables pendant plusieurs semaines d'utilisation. Ils doivent, par ailleurs, pouvoir résister à des déformations cycliques ainsi qu'à des vibrations et des chocs, tout en conservant une bonne stabilité et une bonne fiabilité. Les spécifications de fiabilité du capteur concernent ainsi la précision des mesures, les stabilités à court et long termes et l'hystérésis.

Dans le document FR-A- 2 638 524, on a décrit un capteur de pression utilisable dans les puits de pétrole, qui présente une bonne précision, une bonne stabilité dans le temps et de bonnes caractéristiques en mode dynamique. Ce capteur comprend une cellule portant un dispositif extensométrique à résistance électrique constitué par des dépôts en couches minces, la cellule comprenant une chambre hermétique à l'intérieur de laquelle règne une pression prédéterminée faible et la totalité de la surface externe de la cellule étant soumise à la pression à mesurer. Dans ce capteur, la cellule constitue l'élément sensible à la pression et transforme la pression en déformations, et les dépôts en couches minces qui peuvent être constitués par des films minces de tantale, transforment ces déformations en signal électrique.

Bien que ce capteur donne de bons résultats, on a poursuivi les recherches pour trouver d'autres couches minces extensométriques capables d'améliorer encore les performances de capteurs de pression de ce type.

La présente invention a précisément pour objet une nouvelle couche mince extensométrique utilisable dans un capteur de pression, qui permet d'améliorer les performances du capteur.

Selon l'invention, la couche mince extensométrique est constituée d'un cermet à base de tantale et de nitrure de tantale comprenant du TaN, et elle présente une résistivité de 400 à 1000μΩ.cm, de préférence de 500 à 600μΩ.cm, par exemple d'environ 550μΩ.cm.

Dans cette couche de cermet, la présence du nitrure de tantale TaN qui est très résistif, permet d'augmenter la résistivité de la couche pour la situer dans la gamme de 400 à 1000μΩ.cm, selon sa teneur en nitrure de tantale.

Ceci est très intéressant car dans cette plage de résistivité, on peut optimiser les trois paramètres importants d'un capteur de pression, qui sont

1°) le facteur de jauge ν défini par la formule :

$$\nu = \frac{\frac{\Delta R}{R}}{\frac{\Delta L}{L}}$$

dans laquelle L est la longueur de la couche mince et R sa résistance électrique, facteur qui doit être le plus élevé possible ;

2°) le coefficient de température de la résistance (TCR) qui est défini par la formule :

$$TCR = \frac{1}{R} \times \frac{\Delta R}{\Delta T}$$

dans laquelle R est la résistance de la couche mince et T est la température, coefficient qui doit être le plus faible possible ; et

3°) le taux de frottement interne ou le taux d'anélasticité qui doit être également le plus faible possible.

Ainsi, selon l'invention, en choisissant une couche extensométrique en cermet à base de tantale et de nitrure de tantale, ayant une résistivité de 400 à 1000μΩ.cm, on peut obtenir un facteur de jauge élevé tout en ayant un taux d'anélasticité faible et un coefficient de température convenable.

De préférence, dans la couche mince de cermet, le nitrure de tantale TaN présente une structure δ.

De préférence encore, le nitrure de tantale du cermet est constitué quasiment uniquement de TaN.

Avantageusement, l'épaisseur de la couche est de 0,03 à 0,5μm.

La couche mince extensométrique décrite ci-dessus peut être préparée par un procédé comprenant les étapes suivantes :

a) former sur un substrat isolant une couche mince de tantale contenant une phase nitrure de tantale par dépôt réactif à partir d'une cible de tantale dans une atmosphère constitué d'un mélange de gaz inerte comme l'argon, d'azote et éventuellement d'oxygène, et

b) soumettre la couche mince ainsi obtenue à un traitement thermique à une température de 300 à 600°C.

La première étape de ce procédé peut être réalisée en utilisant des techniques classiques, par exemple la pulvérisation cathodique dans un plasma réactif comprenant par exemple de l'argon, de l'azote et de l'oxygène.

Par cette technique, on dépose une couche de tantale contenant une phase nitrure de tantale formée généralement de TaN et Ta₂N, et on peut régler la quantité de phase nitrure de tantale de la couche mince déposée en réglant de façon appropriée la pression partielle d'azote dans l'enceinte de pulvérisation.

Le traitement thermique de l'étape b) a pour but de transformer le nitrure de tantale $Ta_2N$ de la couche en TaN. Ce traitement thermique peut être réalisé pendant des durées allant de 1 à 300h, de préférence en deux stades dont un premier stade sous air et un second stade sous vide.

La transformation du nitrure de tantale $Ta_2N$ en TaN qui est plus résistif, permet d'augmenter la résistivité de la couche. Par ailleurs, on pense que cette transformation s'accompagne d'une évolution de la structure du nitrure de tantale TaN vers la structure $\delta$, ce qui permet de limiter les phénomènes de relaxation.

Aussi, on préfère les couches minces de cermet constituées quasiment uniquement de tantale métallique et de TaN.

L'invention a encore pour objet un capteur de pression comprenant au moins une couche mince extensométrique telle que définie ci-dessus.

Dans ce capteur de pression, la couche mince extensométrique est disposée sur une cellule soumise à la pression à mesurer et capable de transformer cette pression en contraintes.

D'autres caractéristiques et avantages de l'invention apparaîtront mieux à la lecture de la description qui suit donnée bien entendu à titre illustratif et non limitatif en référence aux dessins annexés sur lesquels

- la figure 1 représente de façon schématique une installation de pulvérisation du type magnétron pour le dépôt des couches minces de l'invention.
- La figure 2 est une micrographie illustrant la structure d'une couche mince en cermet Ta-nitrure de tantale.
- La figure 3 est une représentation schématique de la partie active d'un capteur de pression.
- La figure 4 illustre en coupe verticale la structure complète d'un capteur de pression.
- La figure 5 est un diagramme illustrant la variation du facteur de jauge $\nu$ en fonction de la résistivité de la couche extensométrique.
- La figure 6 est un diagramme illustrant l'évolution du coefficient de température de la résistance en fonction de la résistivité de la couche.
- La figure 7 est un diagramme représentant l'évolution de la dérive du premier jour en fonction de la résistivité de la couche mince.
- La figure 8 est un diagramme représentant la dérive du capteur en fonction du temps, avant traitement thermique de la couche (courbe I) et après traitement thermique de la couche (courbe II).

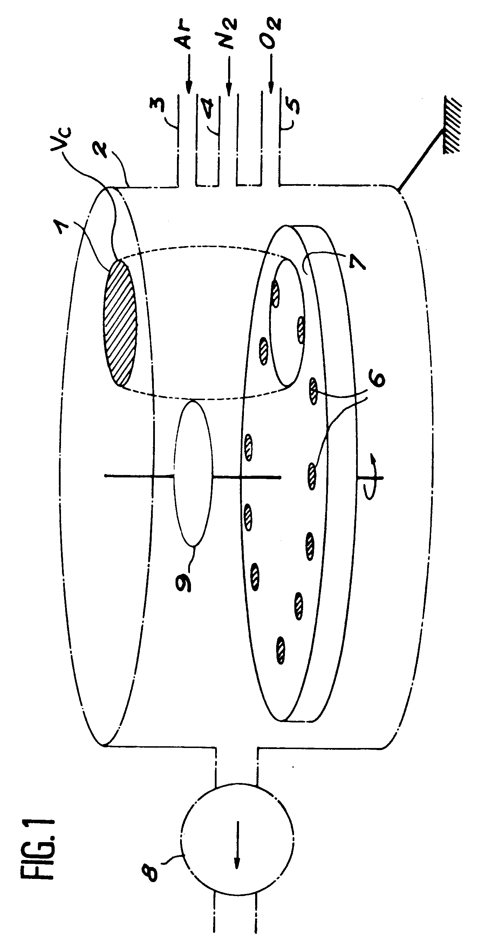

Sur la figure 1, on a représenté de façon très schématique, une installation de pulvérisation réactive utilisable pour la préparation des couches extensométriques de l'invention.

Dans cette installation, la cible de tantale (1) portée à un potentiel approprié $V_C$ est pulvérisée, à l'intérieur d'une enceinte étanche (2) reliée à la terre, dans un plasma réactif d'argon, d'azote et d'oxygène introduits respectivement dans l'enceinte par les conduites (3, 4 et 5), en vue de réaliser le dépôt d'une couche mince sur des substrats isolants (6) disposés sur un support tournant (7).

L'enceinte est maintenue sous vide par une pompe (8) et un cache pivotant (9) est interposé entre la cible (1) et le support (7).

Dans cette installation, on règle l'intensité de la décharge et les pressions partielles des gaz, pour former sur les substrats (7) des couches minces de tantale contenant du nitrure de tantale et on contrôle la teneur en nitrure de tantale des couches en réglant la pression partielle d'azote introduit par la conduite (4).

A titre d'exemple, on peut utiliser une intensité de décharge de 0,1 à 4 A, un potentiel $V_C$ de 300 à 400 V et une pression de gaz de 0,135 à 1,35Pa.

Dans ces conditions, on dépose des couches de tantale contenant du TaN et du $Ta_2N$.

Après cette opération, on soumet les substrats revêtus des couches minces à un traitement thermique effectué sous air à 400°C durant plusieurs dizaines d'heures, puis sous vide à des températures de 300 à 600°C pendant typiquement 1h.

Lors de ce traitement, le nitrure de tantale $Ta_2N$ présent initialement dans la couche se transforme en TaN plus résistif, ce qui permet d'augmenter la résistivité de la couche.

Au cours de ce traitement thermique, il se produit également une évolution de la matrice, c'est-à-dire une modification du taux de tantale dans le cermet et une évolution de la structure du TaN vers la structure delta.

Lors du traitement thermique, le rapport entre les deux constituants TaN et $Ta_2N$ de la phase nitrure de tantale du cermet change et ce changement s'effectue au détriment de la phase métallique. Ainsi, pour une couche mince comportant 70% de tantale avant traitement thermique, la teneur en tantale n'est plus que de 68% après traitement Ta, les teneurs en Ta étant mesurées sur une micrographie d'après la surface occupée par le tantale. Dans le cas d'une couche mince contenant 63% de tantale avant traitement thermique, la teneur en tantale n'est plus que de 58% après traitement thermique.

Toutes ces évolutions permettent d'obtenir la résistivité voulue qui dépend non seulement de la teneur en tantale du film, mais aussi des rapports entre $Ta_2N$ et TaN.

Ainsi, en choisissant une pression partielle d'azote appropriée, on règle les teneurs en $Ta_2N$ et TaN du film, puis on augmente à la valeur voulue la résistivité de la couche en réalisant le traitement thermique.

La résistivité de la couche constitue donc un paramètre représentatif des quantités de TaN et $Ta_2N$ de la couche, qui sont difficiles à déterminer avec une précision suffisante par les méthodes d'analyse actuelles.

A titre d'exemple, on peut toutefois indiquer que la teneur en tantale du cermet, mesurée de la façon décrite ci-dessus est généralement dans la gamme de 80 à 50% pour les résistivités de 400 à 1000$\mu\Omega$.cm.

Pour obtenir des couches minces de Ta-TaN présentant les caractéristiques voulues, il convient de préparer tout d'abord une série de couches minces en utilisant des pressions partielles d'azote variant de 0,135 à 1,35Pa, puis d'effectuer un traitement thermique et de mesurer ensuite les résistivités pour avoir une courbe d'étalonnage montrant comment la résistivité varie en fonction des pressions partielles d'azote. A partir de cette courbe, on peut déterminer quelles sont les conditions à retenir pour obtenir la résistivité voulue.

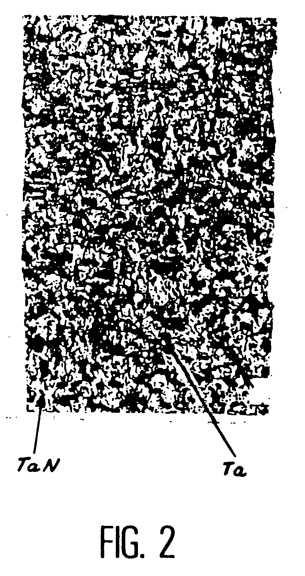

A titre d'exemple, la figure 2 est une micrographie qui illustre la structure correspondant à une couche mince de 550$\mu\Omega$cm obtenue par le procédé de l'invention, dans les conditions suivantes :

    a) <u>dépôt</u>
- intensité de décharge : 2,8 A
- potentiel $V_C$ : 440V
- pression partielle d'argon : 600 Pa
- pression partielle d'azote : 200 Pa
- pression partielle d'oxygène : 5 Pa
- durée de dépôt : 3min 50s.

    b) traitement thermique
- sous air : 400°C, 100h
- sous vide : 550°C, 1h.

La couche mince obtenue a une épaisseur de 0,09$\mu$m et présente une résistivité de 550$\mu\Omega$.cm.

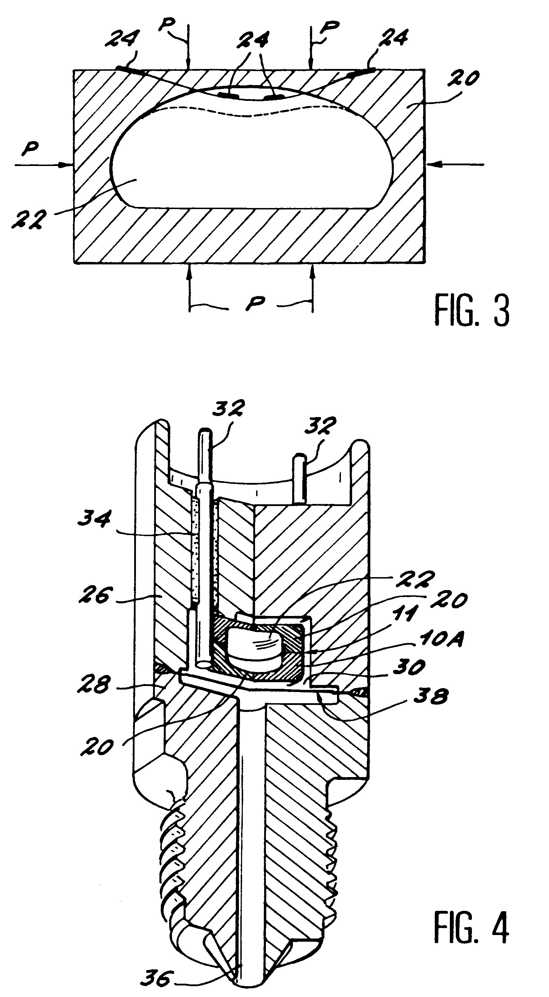

Sur la figure 3, on a représenté de façon très schématique la partie active d'un capteur conforme à l'invention, qui comprend une cellule (20) en matériau sensible à la pression, réalisée par exemple en saphir en particulier en saphir monocristallin tel que l'alumine. Cette cellule présente une cavité interne (22) dans laquelle règne une pression déterminée et elle est soumise sur sa surface externe à la pression P à mesurer représentée par des flèches. Elle est munie par ailleurs sur sa surface externe d'un circuit de couches minces extensométriques (24) constituant l'élément de mesure. La cellule peut être disposée par exemple dans une structure de capteur telle que celle représentée sur la figure 4.

Sur cette figure 4, le capteur de pression comporte principalement la cellule de mesure (20) placée à l'intérieur du corps du capteur qui comprend un corps principal (26) et un corps avant (28) qui lui est fixé de manière solidaire. La cellule (20) est placée à l'intérieur d'une cavité interne (30) ménagée à l'intérieur du corps principal (26). Des moyens de connexion constitués par des câbles de connexion (32) et des traversées étanches (34) traversent le corps principal (26) pour déboucher dans la cavité interne (30) autour de la cellule (20). La fonction principale du corps avant (28) du capteur de pression est de mettre en contact la cellule de mesure avec la pression P du fluide environnant. A cet effet, le corps avant (28) possède un canal axial (36) débouchant, d'une part, sur l'extérieur et, d'autre part, sur la cavité interne (30) dans laquelle se trouve la cellule de mesure. Toutefois, pour protéger la cellule de mesure, une membrane (38) est placée entre le corps principal (26) et le corps avant (28) dans leur plan de jonction. La membrane (38) a une élasticité suffisante pour permettre la transmission de la pression du milieu extérieur à l'intérieur même de la cavité interne (30) où se trouve la cellule de mesure (20). Le volume de la cavité délimité par la membrane (38) est rempli totalement d'une huile introduite lors du montage du capteur de pression.

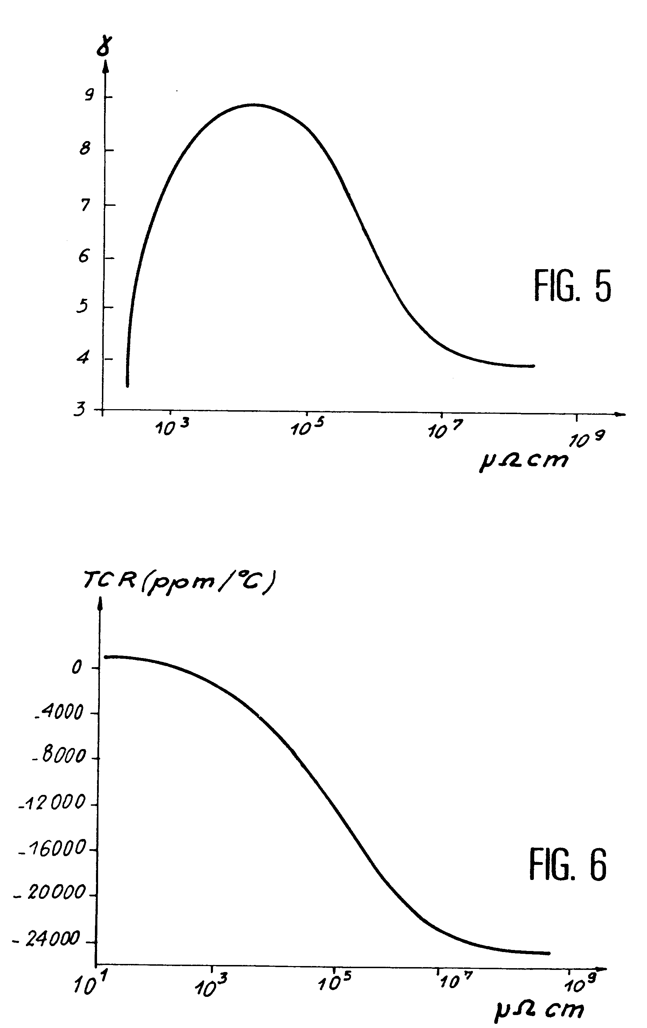

Les figures 5, 6 et 7 illustrent l'effet de la résistivité (en $\mu\Omega$.cm) de couches minces sur le facteur de jauge $\nu$, le coefficient de température de la résistance (TCR) et la dérive du premier jour dans un capteur de pression tel que celui décrit ci-dessus. Les couches ont été obtenues dans des conditions voisines de celles de la figure 2 en faisant varier les pressions partielles d'azote.

Sur la figure 5, on remarque que le facteur de jauge augmente avec la résistivité des couches minces mais qu'il commence à diminuer lorsque la résistivité atteint 10 000$\mu\Omega$.cm.

Sur la figure 6, on voit que le coefficient de température de la résistance (en ppm/°C) est très faible et pratiquement égal à 0 dans le domaine de résistivité de $5.10^2$ à $10^3\mu\Omega$.cm. En revanche, il augmente très rapidement au-delà de $10^3\mu\Omega$.cm.

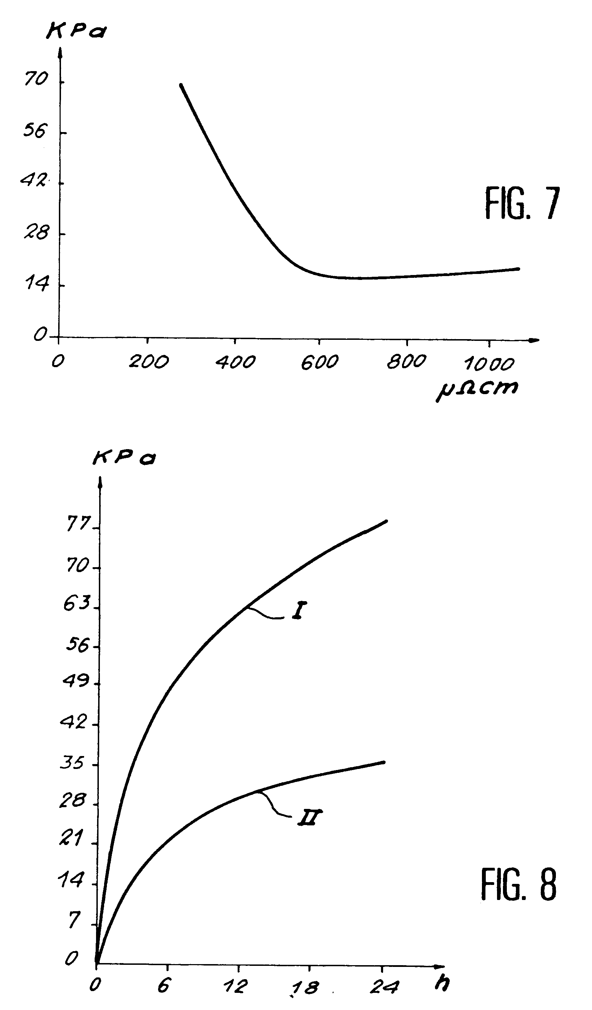

Sur la figure 7, qui représente l'évolution de la dérive de la mesure lors du premier jour (en kPa) en fonction de la résistivité des couches minces en $\mu\Omega$.cm, dans le cas d'une pression P appliquée de 105MPa (15kpsi) et d'une température de 150°C, on remarque que la dérive reste très faible à partir de 600$\mu\Omega$.cm et qu'elle est acceptable à partir de 450$\mu\Omega$.cm.

Les résultats des figures 5, 6 et 7 montrent que la plage de résistivité appropriée est de 400 à 1000$\mu\Omega$.cm puisque dans ces conditions, la dérive du premier jour est faible (au plus 28kPa), et le coefficient de température de la résistance est voisin de 0. Par ailleurs, le facteur de jauge est élevé dans cette gamme de résistivité.

Sur la figure 8, on a représenté la dérive du capteur (en kPa) en fonction du temps (en h) lorsque celui-ci est soumis à une pression de 7MPa (10kpsi) à une température de 150°C. Sur cette figure, la courbe I se réfère à une couche mince Ta-TaN avant traitement thermique, et la courbe 2 se réfère à la même couche après que celle-ci ait été soumise au traitement thermique.

Au vu de cette figure, on constate que la dérive est beaucoup plus faible dans le cas de la couche traitée thermiquement. Ainsi, la stabilité de la couche est nettement améliorée par le traitement thermique.

## Revendications

1. Couche mince extensométrique pour un capteur de pression, caractérisée en ce qu'elle est constituée d'un cermet à base de tantale et de nitrure de tantale comprenant du TaN, et en ce qu'elle présente une résistivité de 400 à $1000\mu\Omega$.cm.

2. Couche mince selon la revendication 1, caractérisée en ce qu'elle présente une résistivité de 500 à $600\mu\Omega$.cm.

3. Couche mince selon la revendication 1, caractérisée en ce qu'elle présente une résistivité d'environ $550\mu\Omega$.cm.

4. Couche mince selon la revendication 1, caractérisée en ce qu'elle a une épaisseur de 0,03 à $0,5\mu m$.

5. Couche mince selon l'une quelconque des revendications 1 à 4, caractérisée en ce que le nitrure de tantale du cermet est formé quasiment uniquement de TaN.

6. Couche mince selon l'une quelconque des revendications 1 à 5, caractérisée en ce que le nitrure de tantale TaN a une structure $\delta$ .

7. Procédé de préparation d'une couche mince extensométrique selon l'une quelconque des revendications 1 à 6, caractérisé en ce qu'il comprend les étapes suivantes :
   a) former sur un substrat isolant une couche mince de tantale contenant des nitrures de tantale TaN et $Ta_2N$, par dépôt réactif à partir d'une cible de tantale dans une atmosphère constitué d'un mélange de gaz inerte, d'azote et éventuellement d'oxygène, et
   b) soumettre la couche mince ainsi obtenue à un traitement thermique à une température de 300 à 600°C, de façon à transformer le $Ta_2N$ présent initialement en TaN plus résistif ;
   continuer le traitement thermique jusque la resistivité de la couche soit comprise entre $400 \mu\Omega$.cm et $1000 \mu\Omega$.cm.

8. Procédé selon la revendication 7, caractérisé en ce que l'on réalise le traitement thermique b), en deux stades dont un premier stade sous air et un second stade sous vide.

9. Capteur de pression comprenant au moins une couche mince extensométrique disposée sur une cellule soumise à la pression à mesurer, caractérisé en ce que la couche mince extensométrique est constituée d'un cermet à base de tantale et de nitrure de tantale comprenant du TaN, et en ce que la couche mince extensométrique a une résistivité électrique de 400 à $1000\mu\Omega$.cm.

10. Capteur selon la revendication 9, caractérisé en ce que le nitrure de tantale TaN a une structure delta.

11. Capteur selon l'une quelconque des revendications 9 et 10, caractérisé en ce que le nitrure de tantale du cermet est formé quasiment uniquement de TaN.

12. Capteur selon l'une quelconque des revendications 9 à 11, caractérisé en ce que la cellule est réalisée en saphir.

13. Capteur selon l'une quelconque des revendications 9 à 12, caractérisé en ce que la couche mince extensométrique a une épaisseur de 0,03 à $0,5\mu m$.

## Patentansprüche

1. Dünne extensiometrische Schicht für einen Drucksensor, dadurch gekennzeichnet, daß sie von einem Cermet auf Basis von Tantal und Tantalnitrit, umfassend TaN, gebildet ist, und daß sie einen spezifischen Widerstand von 400 bis 1000 $\mu\Omega$ cm besitzt.

2. Dünne Schicht nach Anspruch 1, dadurch gekennzeichnet, daß sie einen spezifischen Widerstand von 500 bis 600 $\mu\Omega$ cm besitzt.

3. Dünne Schicht nach Anspruch 1, dadurch gekennzeichnet, daß sie einen spezifischen Widerstand von etwa 550 $\mu\Omega$ cm besitzt.

4. Dünne Schicht nach Anspruch 1, dadurch gekennzeichnet, daß sie eine Dicke von 0,03 bis 0,5 $\mu m$ aufweist.

5. Dünne Schicht nach einem der Ansprüche 1 bis 4, dadurch gekennzeichnet, daß das Tantalnitrit des Cermet quasi ausschließlich aus TaN gebildet ist.

6. Dünne Schicht nach einem der Ansprüche 1 bis 5, dadurch gekennzeichnet, daß das Tantalnitrit TaN eine $\delta$-Struktur aufweist.

7. Verfahren zum Herstellen einer dünnen extensiometrischen Schicht nach einem der Ansprüche 1 bis 6, dadurch gekennzeichnet, daß es die folgenden Schritte umfaßt:

a) Ausbilden, auf einem isolierenden Substrat, einer dünnen Tantalschicht, die Tantalnitrit TaN und $Ta_2N$ enthält durch reaktiven Niederschlag, ausgehend von einem Tantaltarget in einer Atmosphäre, gebildet aus einem Gemisch von Inertgas, Stickstoff und gegebenenfalls Sauerstoff, und

b) Unterwerfen der auf diese Weise erhaltenen dünnen Schicht einer thermischen Behandlung bei einer Temperatur von 300 bis 600°C, derart, daß das $Ta_2N$, das anfänglich vorlag, in TaN mit höherem spezifischen Widerstand transformiert wird,

Fortsetzen der thermischen Behandlung, bis der spezifische Widerstand der Schicht zwischen 400 $\mu\Omega$ cm und 1000 $\mu\Omega$ cm liegt.

8. Verfahren nach Anspruch 7, dadurch gekennzeichnet, daß man die thermische Behandlung gemäß b) in zwei Phasen realisiert, von denen eine erste Phase unter Luft erfolgt, und eine zweite Phase im Vakuum.

9. Drucksensor, der mindestens eine dünne extensiometrische Schicht umfaßt, aufgebracht auf einer Zelle, die einem zu messenden Druck unterliegt, dadurch gekennzeichnet, daß die dünne extensiometrische Schicht von einem Cermet auf Basis von Tantal und Tantalnitrit gebildet wird, das TaN enthält, und daß die dünne extensiometrische Schicht einen spezifischen elektrischen Widerstand von 400 bis 1000 $\mu\Omega$ cm aufweist.

10. Sensor nach Anspruch 9, dadurch gekennzeichnet, daß das Tantalnitrit TaN eine Delta-Struktur besitzt.

11. Sensor nach einem der Ansprüche 9 und 10, dadurch gekennzeichnet, daß das Tantalnitrit des Cermet quasi ausschließlich aus TaN gebildet ist.

12. Sensor nach einem der Ansprüche 9 bis 11, dadurch gekennzeichnet, daß die Zelle aus Saphir hergestellt ist.

13. Sensor nach einem der Ansprüche 9 bis 12, dadurch gekennzeichnet, daß die dünne extensiometrische Schicht eine Dicke von 0,03 bis 0,5 $\mu$m aufweist.

**Claims**

1. A thin strain gauge layer for a pressure transducer, comprising a cermet based on tantalum and tantalum nitride comprising TaN and having a resistivity between 400 microohm.cm and 1000 microohm.cm.

2. A thin layer according to claim 1, having a resistivity of 500 microohm.cm to 600 microohm.cm.

3. A thin layer according to claim 1, having a resistivity in the order of 550 microohm.cm.

4. A thin layer according to claim 1, having a thickness of 0.03 micron to 0.5 micron.

5. A thin layer according to any one of claims 1 to 4, wherein the tantalum nitride of the cermet is constituted almost solely of TaN.

6. A thin layer according to any one of claims 1 to 5, wherein the tantalum nitride TaN has a $\delta$ structure.

7. A method of manufacturing a thin strain gauge layer according to any one of claims 1 to 6, comprising the following steps:

a) forming a thin layer of tantalum containing tantalum nitrides (TaN et $Ta_2N$) phase on an insulating substrate by reactive deposition from a tantalum target in an atmosphere formed by a mixture of an inert gas with nitrogen, and possibly oxygen, and

b) subjecting the thin layer thus obtained to heat treatment at a temperature in the range 300°C to 600°C so as to convert the $Ta_2N$ initially present into the more resistive TaN, such treatment being continued until the resistivity of the layer lies between 400 microohm.cm and 1000 microohm.cm.

8. A method according to claim 7, wherein the heat treatment b) is effected in two stages, of which the first stage is in air and the second stage is under vacuum.

9. A pressure transducer comprising at least one thin strain gauge layer disposed on a cell subjected to the pressure to be measured, said layer being formed by a cermet based on tantalum and tantalum nitride comprising TaN, and having an electrical resistivity of 400 microohm.cm to 1000 microohm.cm.

10. A transducer according to claim 9, wherein the tantalum nitride TaN has a $\delta$ structure.

11. A transducer according to claim 9 or 10, wherein the tantalum nitride of the cermet is formed almost solely of TaN.

12. A transducer according to any of claims 9 to 11, wherein the cell is made of sapphire.

13. A transducer according to any one of claims 9 to 12, wherein the thin strain gauge layer is 0.03 micron to 0.5 micron thick.

FIG.1

FIG. 2

FIG. 3

FIG. 4

FIG. 5

FIG. 6

11

FIG. 7

FIG. 8